# NEW EUROPEAN PATENT SPECIFICATION

(11) **EP 0 368 015 B2**
(45) Date of publication and mention of the opposition decision: **02.01.1997**
(45) Mention of the grant of the patent: 02.02.1994
(21) Application number: 89118877.3
(22) Date of filing: 11.10.1989
(51) Int. Cl.: A21D 8/04

(54) **A method of improving the production process of dry cereal products by enzyme addition**
Verfahren zur Modifizierung der Produktion von trockenen Getreideprodukten durch Enzymhinzufügung
Procédé de modification de la production des produits à base de blé par addition d'enzymes

(30) Priority: 11.10.1988 FI 884668
(43) Date of publication of application: 16.05.1990
(73) Proprietor: Vaasanmylly Oy, SF-00240 Helsinki (FI)
(72) Inventor: Haarasilta, Sampsa, SF-04320 Kerava (FI); Pullinen, Timo, SF-01400 Vantaa (FI); Tammersalo-Karsten, Ina, SF-02120 Espoo (FI); Väisänen, Seppo, SF-04260 Kerava (FI); Fränti, Harri, SF-48300 Kotka (FI)
(74) Representative: Hansen, Bernd, Dr.Dipl.-Chem.

(56) References cited:
- EP-A- 0 338 787
- FR-A- 2 555 602
- US-A- 183 927
- US-A- 3 512 992
- CHEMICAL ABSTRACTS, vol. 78, no. 9, 5th March 1973, page 388, abstract no. 56693f, Columbus, Ohio, US; D. WEIPERT: "Rheology of rye dough. II. Effect of enzymes of various specificity on the rheological properties of the dough", & GETREIDE, MEHL BROT 1972, 26(10), 275-80
- CEREAL CHEMISTRY, vol. 45, no. 4, 1968, pages 339-350, US; K. KULP: "Enzymolysis of pentosans of wheat flour"
- J. SCI. FD. AGRIC. vol. 15, September 1964, pages 607-611, M.V. TRACEY: "The role of wheat flour pentosans in baking"
- CEREAL CHEMISTRY, vol. 66, no. 2, 1989, pages 73-78, US; G.S. GAINES et al.: "Effects of selected commercial enzymes on cookie spread and cookie dough consistency"
- Technical information 34a/1968, Schweizerische Ferment AG, Basel
- p. 62 of the Laboratory Journal n 4279 of the Röhm GmbH, 1975
- Ullman's Encyclopedia of Industrial Chemistry, 1985, vol. A4, p. 359
- B. Sprössler in "Brot und Backwaren", 1986, pp. 50-53
- Invoice of Biocon NV/SA to Nabisco Brands France, 10.3.1988
- Letter of Belin SA, France to Quest Int. France, 18.10.94
- Brockhaus Encyklopädie, 2. Band, 17. Aufl., 1967, p. 772

## Description

The invention relates to a method of improving the production process of dry cereal products by adding cellulolytic and/or hemicellulolytic enzymes to the dough. The enzyme addition improves the properties of the dough (for example, dough transferability) and increases the process capacity by decreasing the amount of dough liquid needed. The enzyme addition provides a further advantage in that the choice of flour for dry bread products is not as critical as previously. The enzyme addition also affects favourably the final product.

As used herein, the term "dry cereal products" refers to baked products made from grain selected from crispbread, biscuits, rusk, breadcrumbs, sour crispbread and crackers

A bottleneck in the production process of dry cereal products, such as crispbread, biscuits, sour crispbread, is often the limited production capacity of ovens used. Attempts have been made to improve the process efficiency by using flour with a low water-binding capacity and by apparatus improvements. Such expedients, however, have been inadequate; in addition, apparatus improvements, such as longer ovens, require high investments.

In an industrial production process of dry bread products, such as crispbread and biscuits, the ingredients (flour, liquid, requisite additives, such as salt, sugar, dough raising agents and possible spices) are mixed into a dough. A thin dough cake is baked rapidly at a high, accurately programmed temperature, and dried. The result is a dry cereal product the crispness and preservation properties of which are at best at a moisture content of 7-9%. On an average, the crispness of biscuits is at best at a moisture content of less than 4%. In addition to water content, the crispness and preservation properties of biscuits are affected by other factors, such as fat content. For example, the protein content of flour used in baking semi-sweet biscuits is of great importance for the crispness of the final product.

The quality of flour to be used in a dry bread product depends on the product to be prepared. In crispbread production, wholerye flour is used in most cases; however, the popularity of wheat crispbread is on the increase. Most biscuits are made of wheat, while the demand and consumption of oatmeal biscuits and especially of rye biscuits are insignificant.

The most important flour properties are those affecting the crumb structure, crispness, and volume.

With doughs raised with yeast, the falling number required for rye flour ranges from 120 to 200. The falling number of rye flour to be used in a dough raised by whipping gas into the dough (so called ice bread) should also be relatively high. Sour, thick crispbread can be made from rye flour having a lower falling number, because the acidity prevents the inherent enzymes of flour from decomposing starch too far. The falling number of flour used in the production of biscuits should be high (more than 300) due to, e.g., their long production process and the rather high temperature of dough water in the production of semi-sweet biscuits, for instance.

Flour used in the production of crispbread usually has a relatively low protein content, generally varying between 8 and 12%. The water-binding capacity of such flour is not as high as that of flour rich in protein, so less energy is required for drying during baking. In biscuit baking, protein content is of vital importance to the quality of flour and that of the product. The protein content of the flour should range from 7.5% to 10.5% on dry substance. Flour having a protein content less than 10% is best suited for baking semi-sweet biscuits.

Yeast or a chemical raising agent can be used for proofing. Proofing can also be effected by mixing gaseous substance into the dough.

In the production of both crispbread and biscuits, water or milk is used as dough liquid. In the production of crispbread, the amount of liquid needed is nearly equal to that of flour, that is, the dough is considerably softer than in the production of normal soft bread. In biscuit production, less liquid is usually needed. The use of large amounts of liquid requires long baking times and plenty of energy at the baking stage.

In a dry cereal product production process, the amount of dough liquid is in most cases determined by the technical qualities of the process and the apparatus. For example, the softness of a dough suitable for use in a crispbread production process and, as a consequence, the amount of liquid needed is determined on one hand by the mechanical strength of the blades of the dough mixer and on the other hand the operation of the pricking device. In addition, the web-forming ability sets certain requirements on the softness of dough. Dough softness is described by a consistency value. (Consistency is measured by a penetrometer by allowing the measuring cone of the penetrometer to fall into the dough for 10 seconds, whereby the penetration of the cone in millimeters gives the consistency of the dough; the greater the value, the softer the dough.)

The crispness, taste, and machinability of wheat crispbread and biscuits can be increased by the use of fat and sugar.

In crispbread production, the dough is formed into a weblike mat after suitable proofing. The mat can be baked as such, or it can be cut or chopped into separate cakes, or the mat is formed into separate cakes by means of moulds, rolls, and the like. The cakes can be patterned before baking, e.g., by pricking. Pricking provides the product with a pattern typical of it, and binds the surface layers of the cake together. If necessary, the final proofing of the products is carried out after the patterning, whereafter the products are baked. Ice bread is not proofed at this stage; it is baked immediately after the pricking.

Biscuits, such as semi-sweet biscuits, are often made by an all-in (straight) dough making process, in which the dough is prepared by mixing all the dry ingredients simultaneously with the dough liquid and other liquid ingredients. The way in which the dough is prepared is of great importance in the production of semi-sweet biscuits. As semi-sweet biscuits should possess an extensible gluten network, relatively high dough temperatures, about + 40°C, are aimed at in dough preparation. An example of a mixer suitable for the production of biscuits is a horizontal two-blade mixer. After preparation, the dough should be allowed to stand so that the dough liquid is absorbed in the dry ingredients (floor time). After the floor time the dough is moulded, e.g., by means of a four-roll feeder and then folded by passing it through a pair of rolls. After folding the dough is passed through sheeting rolls. Sheeted dough is pricked and cut with a roll cutter (drum cutter).

The products lose humidity during baking. The moisture content of a conventional finished crispbread product is about 7-12%. The moisture content of bread raised with gas may be as low as 2%. On an average, the moisture content of biscuits does not exceed 4%.

To achieve the desired final humidity, the baked product usually has to be dried further. The drying can be effected by using a convection oven, basket conveyors transported above the oven in the waste heat, "after-baking", that is, drying in a tunnel oven, or dielectric drying. If necessary, the baked product can be chopped, e.g., by sawing.

It is known that cellulolytic/hemicellulolytic enzymes cleave non-starch polysaccharides present in flour. Addition of cellulolytic and/or hemicellulolytic enzymes has been used to improve the properties of the baking process and the finished baking product.

Japanese Patent Publication 5701/1968 describes a method of improving the quality of white sour bread by adding to the dough an enzyme composition having cellulolytic and/or hemicellulolytic activity. It is emphasized in the patent application that the addition of the enzyme composition causes decomposition of fibrous components present in flour, such as cellulose and pentosans, the presence of which as such would considerably deteriorate the quality of bread by rendering the dough inhomogeneous and by preventing the formation of gluten. It is recited that the addition of cellulolytic/hemicellulolytic enzymes provides soft bread with increased volume, more uniform grain structure and slower ageing than bread prepared with prior art methods.

EP-A-0 338 452 describes the use of cellulolytic/hemicellulolytic enzymes in combination with glucose oxidase or glucose oxidase and sulphydryl oxidase in baking soft bread from wheat and rye flour. These enzymes are used for optimizing the baking process. Moreover, it has been found that the enzyme combinations improve the rheological properties, gluten, processability, and tolerance of a flour dough. It has also been found to improve the volume, grain structure and anti-staling properties of a bakery product.

US-A-3 512 992 discloses a method of preparing bread and bread-like products characterized by adding an enzyme preparation having pentosanase activity and water to the dough.

Chemical Abstracts, vol. 78, no. 9, page 388, abstract no. 56693f discloses a rye dough comprising enzymes such as cellulase and pentosanase. The obtained soft dough has low viscosity and gives a bread with increased volume.

FR-A-2 555 602 discloses an enzyme composition including pentosanase activity and the use of such a composition for preparing bread.

Cereal Chemistry, vol. 45, no. 4, 1968, pp 339-350 and J. Sci. Fd. Agric., vol. 15, September 1964, pp 607-611 disclose the effect of pentosanases such as hemi-cellulase in baking to provide improved baking properties and increased volume.

It has now been found according to the present invention that an addition of cellulolytic and/or hemicellulolytic enzymes increases the process capacity in the production of dry cereal products. The enzyme addition of the invention makes the dough softer, so less dough liquid is required as compared with conventional techniques. Less energy than previously is required for baking the product and the need for after-drying is decreased.

In addition, the product obtained by the method of the invention has a lower shrinkage and increased crispness.

The object of the invention is to improve he baking process of dry cereal products by decreasing the need for dough liquid.

The present invention provides a method of improving the production process of dry cereal products as defined in the claims

The method of the invention provides a baking process with a greater capacity than prior art methods. The baking process of the invention has a lower energy consumption than prior art methods. The proof time is shorter and the baking shrinkage is lesser when the method of the invention is applied. The choice of flour is easier. The obtained product has advantageous properties over products prepared with prior art methods, such as increased crispness.

The enzyme preparation of the invention contains enzymes degrading hemicellulose (xylan, mannan, galactomannan, araban) and its cleavage products or esther-bonds contained therein and/or enzymes degrading cellulose.

For example, an enzyme preparation (Bakezyme 1201 (TM), manufacturer Finnsugar Ltd.) having the following hemicellulolytic and cellulolytic activity can be used in the invention:

| | |
|---|---|
| Xylanase | 25,000 units/g |
| Carboxymethyl cellulase (CMC) | 9,300 units/g |
| Filter paper activity (FP) | 380 units/g |

Xylanase activity represents hemicellulolytic activity while carboxymethyl cellulase activity and filter paper activity represent cellulolytic activity.

A suitable enzyme dosage level is, e.g., 0 - 50,000 units, preferably 10 - 20,000 units of hemicellulase (xylanase) and 0 - 20,000 units, preferably 10 - 10,000 units of cellulase (calculated as carboxymethyl cellulase activity), or correspondingly 0 - 1,000 units, preferably 0.5 - 500 units of cellulase (calculated as filter paper activity) per kg flour.

It is preferred that when the dry cereal product is rye crisp bread, then the enzyme preparation is added in an amount of 1,000-3,000 units of hemicellulose degrading enzymes and/or 400-1,200 units of cellulose degrading enzymes per kg flour.

On the other hand, when the dry cereal product is wheat crisp bread, then it is preferred that the enzyme preparation is added in an amount of 500-2,000 units of hemicellulose degrading enzymes and/or 200-800 units of cellulose degrading enzymes per kg flour.

When the dry cereal product is a semi-sweet biscuit, then it is preferred that the enzyme preparation is added in an amount of 2,500-10,000 units of hemicellulose degrading enzymes per kg flour.

The definitions of the different enzyme activities and the methods of determining the enzyme activities are set forth below:

Xylanase activity (Khan A.W. et al., Enzyme Microb. Technol. 8 (1986) 373-377):

1 ml of a suitably diluted enzyme solution in acetate buffer (0.05 M NaAc, pH 5.3) is tempered at 50°C. 1 ml of xylan substrate (1% xylan, 0.05 M NaAc, pH 5.3) is added. The sample is incubated for 30 min at 50°C. The reaction is stopped by adding 3 ml of DNS reagent (3,5-dinitrosalicylate), and the colour is developed by boiling the sample mixture for 5 min. The absorbance is measured at 540 nm. One enzyme unit liberates 1 micromole of reducing sugars per one minute calculated as glucose.

Carboxymethyl cellulase activity (Mandels M., Weber J., Adv. Chem. Ser. 95 (1969) 391 -413):

1 ml of suitably diluted enzyme solution in acetate buffer (0.05 M NaAc, pH 4.8) and 1 ml of CMC substrate (1% CMC, 0.05 M NaAc, pH 4.8) are mixed together. The solution is incubated for 10 min at 50°C. The reaction is stopped by adding 3 ml of DNS reagent. One enzyme unit liberates 1 micromole of reducing sugars per one minute.

Filter paper activity (Ghose, T.K. et al., Symposium of Enzymatic Hydrolysis of Cellulose, Bailey M., Enari T.M., Linko M., Eds. (SITRA, Aulanko, Finland, 1975), p. 111-136):

A piece of filter paper (Whatman 1, 50 mg) is added to 1 ml of acetate buffer (0.05 M NaAc, pH 4.8). 1 ml of suitably diluted enzyme solution is added. The solution is incubated for 1 h at 50°C. The reaction is stopped by adding 3 ml of DNS reagent, and the colour is developed and measured similarly as in the xylanase determination. One activity unit liberates 1 micromole of reducing sugars per one minute calculated as glucose.

The invention and the advantages to be obtained by it will be described in greater detail by means of working examples.

### Example 1

When using an enzyme which renders the dough softer, the amount of dough water can be decreased. To determine the decrease in the amount of water, the following test was carried out, in which the above-mentioned enzyme preparation Bakezyme 1201 (TM) was added to the dough in amount of 50 mg/kg flour.

Rye meal with a high falling number was used in this crispbread baking test. The flour was measured for the following properties:

| | |
|---|---|
| Moisture content (%) | 13.3 |

| Enzyme activity (U/kg flour d.s.) | |
|---|---|
| alpha-amylase | 675 |
| protease | 4,700 |
| xylanase | 2,100 |
| Protein (Kjeldahl) (% d.s.) | 10.0 |
| Starch (Boehringer-Mannheim kit) | 64.1 |
| Pentosan content (%) | 8.2 |
| Falling number (7 g) | 208 |

The composition of the dough was as follows (amounts given as percentages on the amount of flour; the amount of flour used was 4 kg):

| | |
|---|---|
| Flour | 100 |
| Yeast | 5.5 |
| Salt | 1.9 |
| Water (control) | 90 |

In the test series, the enzyme dosage level was kept constant (50 mg/kg flour) with the exception of the control, and the amount of water was decreased (90%, 87.5%, 85% on the original amount, i.e., 90%).

The baking was carried out in the following way. First, room temperature flour, to which enzyme weighed with an analytical balance had been added, was introduced into the mixing bowl. Salt and yeast suspended in water were then added in solution form. Dough temperature was adjusted to 28°C by means of the water temperature. The ingredients were mixed using a Hobart A 200 mixer for 12 minutes at speed 1. Mixing was followed by first proofing of 240 minutes, whereafter the dough was braked (homogenized) in the Hobart bowl. Sugar solution was also added for yeast food.

The dough was then rolled into a mat, pricked (embossed), proofed for 28 minutes (37°C, 90% relative humidity), and baked at a high temperature for 9 minutes. Changes in the consistency of the different doughs are shown in Table 1.

**Table 1**

| Softening of doughs according to penetrometer measurements | | | | | |
|---|---|---|---|---|---|
| | control | control | Hemicellulase (xyl.) 1,250 U/kg flour Cellulase (CMC) 470 U/kg flour | | |
| | | | -9.5% H₂O | -12.5% H₂O | -15% H₂O |
| After mixing of dough | 16.0 | 16.0 | 15.5 | 15.5 | 13.5 |
| 1 h | 16.5 | 17.2 | 18.0 | 18.0 | 16.0 |
| 2 h | 19.0 | 18.0 | 21.0 | 21.0 | 18.5 |
| 3 h | 21.0 | 20.0 | 24.0 | 23.0 | 21.0 |
| After first proofing | 24.0 | 22.0 | 24.0 | 25.5 | 24.0 |
| After braking | 29.0 | 30.5 | 33.0 | 34.0 | 30.5 |

It appears from the results that even though the amount of water was decreased, the dough was still processable. The same final consistency as in the control was achieved with a 15% decrease in the amount of water.

The finished, cooled product was further measured for its height, crispness, humidity and volume weight. There were no differences in these properties between parallel controls and products containing 85% water + enzyme.

### Example 2

To find out the enzyme dosage level and water decrease, the following test was carried out, in which flour with a lower falling number (165) than in the tests of Example 1 was used. Otherwise the baking was carried out as described in Example 1, adding the enzyme preparation Bakezyme 1201 (TM) 90-150 mg/kg flour. In terms of enzyme activities, this enzyme dosage level is equivalent to 2,250 - 3,750 units of hemicellulase (xylanase) and 840-1,400 units of cellulase (calculated as carboxymethyl cellulase activity) or correspondingly 35 - 60 units of cellulase (calculated as filter paper activity) per kg flour. The flour was measured for the following properties:

| | |
|---|---|
| Moisture content (%) | 11.5 |

| Enzyme activity (U/kg flour d.s.) | |
|---|---|
| alpha-amylase | 506 |
| protease | 7,200 |
| xylanase | 2,400 |
| Protein (Kjeldahl) (% d.s.) | 11.1 |
| Starch (Boehringer-Mannheim kit) | 63.1 |
| Pentosan content (%) | 6.4 |
| Falling number (7 g) | 165 |

The composition of the dough was as follows (amounts given as percentages on the amount of flour; the amount of flour used was 4 kg):

| | |
|---|---|
| Flour | 100 |
| Yeast | 3.8 |
| Salt | 2.1 |
| Water (control) | 90 |

Water amounts in the test series with respect to the control (in which the amount of water was 90% on the weight of flour = 100%) were 112%, 107%, 100% and 85%. Enzyme dosage levels were 90, 100, 105, 120, 150 mg/kg flour.

The dough was mixed similarly as in Example 1 except that the first proof time was only 120 minutes. At the braking stage, glucose solution was added for yeast food. The dough moulding steps were the same as in Example 1 except that the proof time was only 21 minutes (35°C, 85% relative humidity). The products were baked at a high temperature for 8 minutes and allowed to cool before their properties were determined. Dough consistencies as a function of time are shown in Table 2.

**Table 2**

| Softening of dough according to penetrometer measurements | | | | | | | | | | | |
|---|---|---|---|---|---|---|---|---|---|---|---|
| | | | cont. | cont. | | | | | | | |
| Hemicellulase (xyl.) U/kg | - | - | - | - | - | 2250 | 2500 | 2500 | 2630 | 3000 | 3750 |
| Cellulase (CMC) U/kg | - | - | - | - | - | 840 | 930 | 930 | 980 | 1120 | 1400 |
| Water amount ml | 4030 | 3850 | 3600 | 3600 | 3060 | 3060 | 3060 | 3060 | 3060 | 3060 | 3060 |
| Water amount % (on zero level) | 112 | 107 | 100 | 100 | 85 | 85 | 85 | 85 | 85 | 85 | 85 |
| After mixing of dough | 19.0 | 17.8 | 16.0 | 16.0 | 12.5 | 14.5 | 17.5 | 17.5 | 17.0 | 17.0 | 18.5 |
| 40' | 22.0 | 20.5 | 18.8 | 18.0 | 14.0 | 17.5 | 18.0 | 18.5 | 18.0 | 20.0 | 21.0 |
| 80' | 24.5 | 24.0 | 20.5 | 21.5 | 17.0 | 19.0 | 21.5 | 21.5 | 19.5 | 21.0 | 22.0 |
| After first proofing | 26.5 | 25.0 | 21.0 | 23.0 | 17.5 | 20.0 | 22.0 | 22.0 | 22.5 | 22.5 | 23.0 |
| After braking | 28.5 | 27.5 | 24.5 | 26.5 | 19.0 | 24.0 | 26.5 | 25.0 | 25.0 | 25.5 | 28.0 |

Doughs having a "normal" consistency after braking (that is, the controls of about 100% and doughs prepared with a water amount of 85% and enzyme dosage level 100 - 120 mg/kg (2,500 - 3,000 U/kg)) gave similar final products. Samples baked from a softer dough (enzyme dosage level 150 mg/kg (3,750 U/kg) or water amounts of 112% and 107%, respectively) yielded non-homogeneous texture. Consistently, bread prepared from too hard a dough (enzyme dosage level 90 mg/kg (2,250 U/kg) + 85% water, or 85% water without enzyme) already gave bread with reduced height.

### Example 3

A baking test was carried out on a continuously operated bakery-scale crispbread baking line. The ratios and quality of the dough ingredients were the same as those used in Example 2. Enzyme was added 90 mg/kg flour (enzyme activity: 2,250 units of hemicellulase (xylanase) and 840 units of cellulase (CMC) per kg flour), whereby the amount of dough water could be dropped from the normal percentage to 85% similarly as in the test bake. Since the mass flow contained more dry substance than normally, the weight of an unbaked cake was dropped 6.25% from the normal value.

The width of the unbaked cake could also be reduced by about 1.0% since the dough prepared with the enzyme addition had a better rise than a product prepared without enzyme addition.

The oven time was conventional in the test, whereby a 7.7% increase in capacity was obtained with the enzyme addition (decrease in energy demand).

With the enzyme addition, the dough rose more rapidly than usually and the properties of the finished product were good. The crispness of the product was even slightly greater than that of a product prepared without enzyme addition.

A similar test was carried out by keeping the amount of energy at a conventional value and shortening the oven time by 7.7%, corresponding to the decrease in energy demand. The product obtained was similar to that described above.

### Example 4

To find out the enzyme dosage level and water decrease of wheat crispbread, a pilot-scale test was carried out.

Flour with the following properties was used in the wheat crispbread baking tests:

| | |
|---|---|
| Moisture content (%) | 13.4 |
| Ash content (% d.s.) | 0.66 |
| Amount of moist gluten (%) | 26.0 |
| Water binding ability of farinogram | 58.1% |
| Maximum temperature of amylogram | 74°C |
| Maximum height of amylogram | 330 AU |

| Enzyme activities (U/kg flour d.s.) | |
|---|---|
| amylase | 430 |
| protease | 3030 |
| xylanase | 1980 |

Flour and the other dry ingredients were first mixed into a powdery mixture. Yeast and water were added to the mixture.

Composition of the powder mixture was as follows:

| | |
|---|---|
| Flour | 87.2% |
| Sugar | 5.0% |
| Fat | 5.0% |
| Salt | 1.8% |
| Yeast | 5% on weight of powder mixture |
| Water | 57.5% on weight of powder mixture |

In the test series, the enzyme dosage level and the water decrease were determined in such a manner that the dough consistency remained constant.

The baking (2 kg of dough) was carried out similarly as in Example 1 except that the first proof time was 1 h and the final proof time 45 min. Enzyme dosage levels used (Bakezyme 1201 (TM)) and water amounts are shown in the following Table 3.

**Table 3**

| Softening of wheat crispbread dough as a function of time | | | | |
|---|---|---|---|---|
| | control | | | |
| Hemicellulase (xyl.) (U/kg) | - | 625 | 1250 | 1880 |
| Cellulase (CMC) (U/kg) | - | 230 | 470 | 700 |
| Amount of water ml | 1160 | 1070 | 960 | 850 |
| Amount of water, % on powder mixture | 57.5 | 53.5 | 48.0 | 42.5 |
| Consistency after mixing the dough | 20.0 | 20.5 | 20.5 | 20.0 |
| Consistency after first proof | 21.0 | 21.5 | 21.0 | 21.5 |
| Consistency after braking | 30.0 | 31.0 | 31.0 | 31.5 |

There were no differences in the measured properties of products prepared from the dough with constant consistency. The measured properties were the same as in Example 1.

### Example 5

### Production of semi-sweet biscuits

Wheat flour with the following properties was used in the baking test:

| | |
|---|---|
| Moisture content (%) | 12.7 |

| Enzyme activity (U/kg flour d.s.) | |
|---|---|
| alpha-amylase | 223 |
| protease | 1,450 |
| xylanase | 1,809 |
| Protein (% d.s.)(Kjeldahl x 5.7) | 10.8 |
| Falling number | 365 |
| Ash (% d.s.) | 0.66 |
| Swelling number | 5 |
| Water binding (ml/300 g flour) | 172 |

Composition of the basic dough:

| | (g) | (% on flour) |
|---|---|---|
| Wheat flour | 492 | 100 |
| Vegetable fat | 82 | 16.6 |
| Icing sugar | 90 | 18.2 |
| Glucose | 17 | 3.4 |
| Fructose | 17 | 3.4 |
| Starch syrup TS 40 | 21 | 4.3 |
| Cornstarch | 70 | 14.3 |
| Dry skim milk | 21 | 4.2 |
| Table salt | 5 | 1 |
| Volatile salt | 6.9 | 1.4 |
| Tartaric acid | 0.8 | 0.2 |
| Baking soda | 1.9 | 0.4 |
| Sodiumdisulphite, 10% aqueous solution | 3.8 | 0.8 |
| Water | 160 | 32.5 |
| | 988.2 | |

The enzyme preparation to be tested, that is, Bakezyme 1201 (TM) having a xylanase activity of 25,000 U/g, manufacturer Finnsugar Ltd., was added to the dough as follows:

| Sample | Xylanase U/g flour |
|---|---|
| A | 0 |
| B | 500 |
| C | 1,000 |
| D | 1,500 |
| E | 2,500 |
| F | 5,000 |
| G | 10,000 |

Baking was carried out under pilot kitchen conditions by the all-in baking process as follows:

Water (+42°C) was introduced into the bowl of a Kenwood Chef mixer. Sodiumdisulphite solution and starch syrup were added to the water as well as the mixed dry ingredients of the formula. Fat was added on the dry ingredients.

The dough was kneaded (kneading hook) for one minute at the lowest speed of the mixer and for four minutes at speed IV. After kneading the temperature of the doughs varied between +29°C and +31°C and pH between 8.0 and 8.3.

The softness of the doughs was measured immediately after kneading with a penetrometer (SUR PNR 6, cone probe, penetration time 10 s). The softness and stickiness of corresponding doughs containing more water for the reasons of the measuring technique used were also measured with a farinograph (Brabender) by introducing 300 g of dough into the trough of the farinograph and by kneading it at constant temperature +30°C at farinograph speed 2 for 10 minutes. The softness value was obtained after 5 minute kneading as farinogram height (Brabender unit, BU), stickiness was measured from the corresponding gram point as farinogram width (BU).

After 10 minute floor time the doughs were first rolled manually into 3 x 3 mm thick sheets and then on a grease-proof paper into a 1 mm thick sheet which was cut manually with a round mould (diameter 61 mm). The whole cut dough sheet was transferred on a baking sheet covered with a 1 mm hole network. On the baking sheet the dough sheet was pricked manually by means of a pricking wheel and the dough remaining outside the cut portions was removed.

The biscuits were baked in a convection oven for 7 minutes at 180-200°C, whereafter they were transferred on to a tray and allowed to cool at room temperature.

After having cooled for half an hour, the finished biscuits were determined for their moisture content (130°C, 1 h). The moisture content varied from 3.0% to 6.5%. The pH of the biscuits varied from 7.0 to 7.7.

The effect of the enzyme treatment on the softness and stickiness of the biscuit dough appears from the following Tables 4 and 5.

**Table 4**

| Effect of enzyme treatment on the softness of a biscuit dough as measured with a penetrometer | | | |
|---|---|---|---|
| Sample | Xylanase (U/kg flour) | Penetration (1/10 mm) | Penetration delta A (%) |
| A | 0 | 252 | 0 |
| B | 500 | 256 | +2 |
| C | 1,000 | 247 | -2 |
| D | 1,500 | 255 | +1 |
| E | 2,500 | 256 | +2 |
| F | 5,000 | 263 | +4 |
| G | 10,000 | 269 | +6 |

**Table 5**

| Effect of enzyme treatment on the softness and stickiness of a biscuit dough as measured with a farinograph | | | | | |
|---|---|---|---|---|---|
| Sample | Xylanase (U/kg flour) | Softness (BU) | Softness delta A (%) | Stickiness (BU) | Stickiness delta A (%) |
| A | 0 | 675 | 0 | 160 | 0 |
| B | 500 | 735 | -3 | 170 | +10 |
| C | 1,000 | 690 | -2 | 160 | 0 |
| D | 1,500 | 770 | -12 | 220 | +27 |
| E | 2,500 | 750 | -10 | 170 | +6 |
| F | 5,000 | 670 | +0.7 | 130 | -19 |
| G | 10,000 | 160 | +76 | 80 | -50 |

The enzyme treatment improved the processability and rollability of the biscuit dough. This effect was most marked with the xylanase activity of 2,500 - 10,000 U/kg flour.

The enzyme treatment increased the softness of the dough, especially with the xylanase activity of 2,500 - 10,000 U/kg flour, best with the xylanase activity of 5,000 - 10,000 U/kg flour.

The enzyme treatment also decreased the stickiness of the biscuit dough, particularly with the xylanase activity of 5,000 - 10,000 U/kg flour.

By means of the enzyme treatment, the amount of dough water could be decreased about 9% on the total amount of water without affecting adversely the processability and the quality of the final product, when the enzyme preparation was added in the dough so that the xylanase activity was 2,500 - 10,000 U/kg flour; preferably 10,000 U/kg flour.

Other applications:

In the above examples, the enzyme treatment of the invention has been applied to the production of rye and wheat flour crispbread and semi-sweet biscuits only. The enzyme treatment is, however, likewise applicable to the production of other dry cereal products, such as rusk, breadcrumbs, sour crispbread and crackers.

## Claims

1. Method of producing dry cereal products selected from crispbread, rusk, breadcrumbs and sour crispbread, wherein an enzyme preparation containing hemicellulose and/or cellulose degrading enzymes is added to the dough.

2. Method according to claim 1, characterised in that the enzyme preparation is added in an amount of 0 - 50,000 units of hemicellulose degrading enzymes and 0 - 20,000 units of cellulose degrading enzymes per kg flour.

3. Method according to claim 2, characterised in that the enzyme preparation is added in an amount of 10 - 20,000 units of hemicellulose degrading enzymes and/or 10 - 10,000 units of cellulose degrading enzymes per kg flour.

4. Method according to any one of claims 1 to 3, characterised in that the dry cereal product is crispbread.

5. Method acceding to claim 4, characterised in that the dry cereal product is rye crispbread.

6. Method according to claim 4, characterised in that the dry cereal product is wheat crispbread.

7. Method according to claim 5, characterised in that the enzyme preparation is added in an amount of 1,000 - 3,000 units of hemicellulose degrading enzymes and/or 400 - 1,200 units of cellulose degrading enzymes per kg flour.

8. Method according to claim 6, characterised in that the enzyme preparation is added in an amount of 500 - 2,000 units of hemicellulose degrading enzymes and/or 200 - 800 units of cellulose degrading enzymes per kg flour.

9. Method of producing dry cereal products selected from biscuits and crackers, wherein an enzyme preparation containing 10 - 20,000 units of hemicellulose and/or 10 - 10,000 units of cellulose degrading enzymes is added to the dough.

10. Method according to claim 9, characterised in that the dry cereal product is semi-sweet biscuit.

11. Method according to claim 10, characterised in that the enzyme preparation is added in an amount of 2,500 - 10,000 units of hemicellulose degrading enzymes per kg flour.

## Patentansprüche

1. Verfahren zur Erzeugung von trockenen Getreideprodukten, ausgewählt aus Knäckebrot, Zwieback, Paniermehl und saurem Knäckebrot, worin ein Enzympräparat, umfassend hemicellulose- und/oder cellulosezersetzende Enzyme, zu dem Teig gegeben wird.

2. Verfahren nach Anspruch 1,
dadurch **gekennzeichnet**, daß
das Enzympräparat in einer Menge von 0 bis 50000 Einheiten an hemicellulosezersetzenden Enzymen und 0 bis 20000 Einheiten an cellulosezersetzenden Enzymen pro kg Mehl zugegeben wird.

3. Verfahren nach Anspruch 2,
dadurch **gekennzeichnet**, daß
das Enzympräparat in einer Menge von 10 bis 20000 Einheiten an hemicellulosezersetzenden Enzymen und/oder 10 bis 10000 Einheiten an cellulosezersetzenden Enzymen pro kg Mehl zugegeben wird.

4. Verfahren nach einem der Ansprüche 1 bis 3,
dadurch **gekennzeichnet**, daß
das trockene Getreideprodukt Knäckebrot ist.

5. Verfahren nach Anspruch 4,
dadurch **gekennzeichnet**, daß
das trockene Getreideprodukt Roggenknäckebrot ist.

6. Verfahren nach Anspruch 4,
dadurch **gekennzeichnet**, daß
das trockene Getreideprodukt Weizenknäckebrot ist.

7. Verfahren nach Anspruch 5,
dadurch **gekennzeichnet**, daß
das Enzympräparat in einer Menge von 1000 bis 3000 Einheiten an hemicellulosezersetzenden Enzymen und/oder 400 bis 1200 Einheiten an cellulosezersetzenden Enzymen pro kg Mehl zugegeben wird.

8. Verfahren nach Anspruch 6,
dadurch **gekennzeichnet**, daß
das Enzympräparat in einer Menge von 500 bis 2000 Einheiten an hemicellulosezersetzenden Enzymen und/oder 200 bis 800 Einheiten an cellulosezersetzenden Enzymen pro kg Mehl zugegeben wird.

9. Verfahren zur Erzeugung von trockenen Getreideprodukten aus Biskuits und Kräckern, worin ein Enzympräparat, umfassend 10 bis 20000 Einheiten an hemicellulose- und/oder 10 bis 10000 Einheiten an cellulosezersetzenden Enzymen zu dem Teig gegeben wird.

10. Verfahren nach Anspruch 9,
dadurch **gekennzeichnet**, daß
das trockene Getreideprodukt ein halbsüßer Biskuit ist.

11. Verfahren nach Anspruch 10,
dadurch **gekennzeichnet**, daß
das Enzympräparat in einer Menge von 2500 bis 10000 Einheiten an hemicellulosezersetzenden Einheiten pro kg Mehl zugegeben wird.

## Revendications

1. Procédé pour la production de produits secs à base de céréales, choisis parmi les galettes croustillantes ("crispbreads"), les biscottes, la chapelure et les galettes croustillantes ("crispbreads") aigres, dans lequel une préparation enzymatique contenant des enzymes dégradant l'hémicellulose et/ou la cellulose est ajoutée à la pâte.

2. Procédé selon la revendication 1, caractérisé en ce que la préparation enzymatique est ajoutée en quantité de 0 à 50000 unités d'enzymes dégradant l'hémicellulose et de 0 à 20000 unités d'enzymes dégradant la cellulose par kg de farine.

3. Procédé selon la revendication 2, caractérisé en ce que la préparation enzymatique est ajoutée en quantité de 10 à 20000 unités d'enzymes dégradant l'hémicellulose et/ou de 10 à 10000 unités d'enzymes dégradant la cellulose par kg de farine.

4. Procédé selon l'une quelconque des revendications 1 à 3, caractérisé en ce que le produit sec à base de céréales est une galette croustillante ("crispbread").

5. Procédé selon la revendication 4, caractérisé en ce que le produit sec à base de céréales est une galette croustillante ("crispbread") de seigle.

6. Procédé selon la revendication 4, caractérisé en ce que le produit sec à base de céréales est une galette croustillante ("crispbread") de froment.

7. Procédé selon la revendication 5, caractérisé en ce que la préparation enzymatique est ajoutée en quantité de 1000 à 3000 unités d'enzymes dégradant l'hémicellulose et/ou de 400 à 1200 unités d'enzymes dégradant la cellulose par kg de farine.

8. Procédé selon la revendication 6, caractérisé en ce que la préparation enzymatique est ajoutée en quantité de 500 à 2000 unités d'enzymes dégradant l'hémicellulose et/ou de 200 à 800 unités d'enzymes dégradant la cellulose par kg de farine.

9. Procédé pour la production de produits secs à base de céréales, choisis parmi les biscuits et biscuits secs ("crackers"), dans lequel une préparation enzymatique contenant 10 à 20000 unités d'enzymes dégradant l'hémicellulose et/ou 10 à 10000 unités d'enzymes dégradant la cellulose est ajoutée à la pâte.

10. Procédé selon la revendication 9, caractérisé en ce que le produit sec à base de céréales est un biscuit semi-doux.

11. Procédé selon la revendication 10, caractérisé en ce que la préparation d'enzymes est ajoutée en quantité de 2500 à 10000 unités d'enzymes dégradant l'hémicellulose par kg de farine.
